# EUROPEAN PATENT APPLICATION

(11) **EP 0 852 186 A2**
(43) Date of publication of application: **08.07.1998**
(21) Application number: 98300047.2
(22) Date of filing: 06.01.1998
(51) Int. Cl.: B41M 1/30, G06K 11/18, B41M 7/00, B41M 3/00

(54) **Method of making a mat**

(30) Priority: 06.01.1997 GB 9700135
(71) Applicant: Listawood Limited, King's Lynn, Norfolk, PE31 6TN (GB)
(72) Inventor: Allen, Arthur, Karpley Kings Lynn, Norfolk PE31 6TN (GB)
(74) Representative: Weitzel, David Stanley

(57) **Abstract**

The step of printing onto the surface of a flexible sheet material conventionally involves printing a colour image by a plurality of offset litho printing steps, then screen over printing a dense white continuous layer on what becomes the back of the image. The plastics sheet is conventionally adhered to the base layer by means of a more or less white self adhesive tape. When we investigated the possibility of leaving out the white screen printing step, we found that tiny air bubbles spoiled the image as seen through the plastics sheet.

Against this background, there is disclosed a method of making a mouse mat, comprising the steps of: printing a design and/or text onto a surface of a flexible sheet plastics material; printing by offset litho white ink over the said design and/or text; and adhering the printed surface onto a resiliently compressible backing sheet using a double sided self adhesive tape having a white liner.

Offset litho printing has the advantages of being quicker and less labour intensive. It is possible to use inks which are cured by exposure to ultraviolet light, so avoiding the drying and stacking problems. Much less ink is used.

## Description

This invention relates to a method of making a mat.

The background of the invention will be explained in relation to mouse mats although the problems may be found in other applications to which the solutions are relevant.

The step of printing onto the surface of the flexible sheet material conventionally involves printing a colour image by a plurality of offset litho printing steps, then screen over printing a dense white continuous layer on what becomes the back of the image. The screen printing step is time consuming and labour intensive, requires a drying oven and the dried sheets have to be stacked between separators because ink is only touch dry on leaving the oven. The plastics sheet is conventionally adhered to the base layer by means of a more or less white self adhesive tape. When we investigated the possibility of leaving out the white screen printing step, we found that tiny air bubbles spoiled the image as seen through the plastics sheet.

Against this background, an aspect of the invention provides a method of making a mouse mat, comprising the steps of:
printing a design and/or text onto a surface of a flexible sheet plastics material;
printing by offset litho white ink over the said design and/or text; and
adhering the printed surface onto a resiliently compressible backing sheet using a double sided self adhesive tape having a white liner.

Offset litho printing has the advantages of being quicker and less labour intensive. It is possible to use inks which are cured by exposure to ultraviolet light, so avoiding the drying and stacking problems. Much less ink is used. Although the offset litho printed white layer is inherently much less dense than a screen printed layer, even a single run is sufficient to provide acceptable results. two runs make a discernible improvement. Further runs make no significant improvement.

The liner may conveniently be polypropylene.

One form of mouse mat has a resilient foam plastics or rubber base layer to which is adhered a translucent PVC top surface layer. Before assembly the back surface of the PVC layer is printed with a design often of a promotional or advertising nature. Such mouse mats are often given away as promotional gifts. The mat is made by printing ink onto the under surface of a PVC sheet;
adhering the printed surface onto a resiliently compressible backing sheet to form a laminate; and
die cutting the laminate around a periphery to separate the mat from the sheets.

Printing onto PVC is known to be difficult and the adherence of the ink to the layer is low. It is usual for the printing to extend right to the edges of the mat and the die cutting step places stress on the adhesion of the ink to the PVC.

In order to ensure that the ink remains adhered to the PVC, the surface to be printed is mat from which the translucency is derived. This detracts from the quality of the image seen from the top surface through the layer, compared with an image print on a shiny surface. The mat layer is found to be necessary, however, in order to obtain sufficient adhesion in order to allow the die cutting step to be performed. Indeed, the process is sufficiently marginal that it has only been possible with PVC and all mouse mats of this form are made in this way.

Against this background an adddtional or alternative aspect of the invention provides a method of making a mat comprising the steps of:
coating a glossy surface of transparent flexible sheet plastics material with a coating material to provide a key for printing ink;
printing ink onto the coated surface;
adhering the printed surface onto a resiliently compressible backing sheet to form a laminate; and
die cutting the laminate around a periphery to separate the mat from the sheets.

Surprisingly, coating materials can provide sufficiently good adhesion between the ink and the shiny surface of the plastics sheet material to withstand the die cutting step without separation. Even more surprisingly, the plastics material is not limited to PVC but can be polypropylene which is even more difficult to print. Polypropylene has better optical properties than PVC and is less expensive.

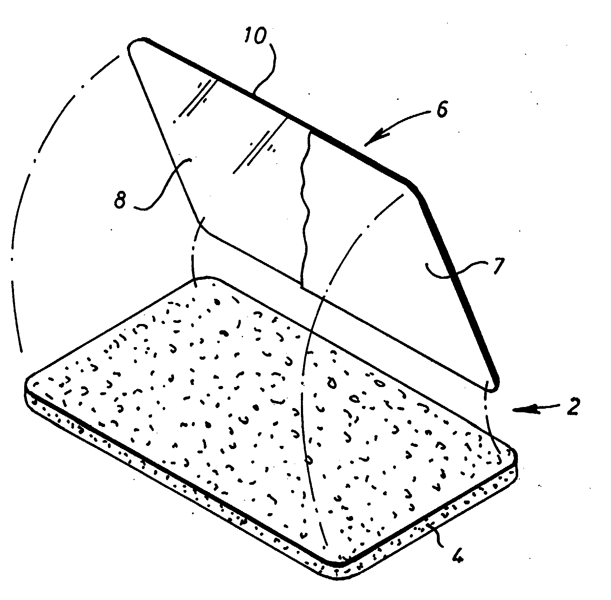

Examples of the invention will now be described with reference to the accompanying drawing which is an exploded view of sheets to be assembled to make a mouse mat made by a method exemplifying the invention.

A mouse mat is laminated from sheets 4 and 6 of materials, shown exploded in the drawing. A base layer 4 comprises an open cell foam (expanded) plastics or rubber sheet. In the case of plastics material this may be ethylene propylene diene monomer. In the case of rubber this may be natural rubber.

In order to carry high optical quality advertising or promotional material, a transparent so called "rigid" mark resist PVC or polypropylene layer 6 is underprinted and adhered to the foam layer. The layer is in practice flexible.

The transparent layer 6 has a flat shiny undersurface 8. The upper surface 10 has a sand grain embossed finish.

In order to improve the adhesion of printing ink to the shiny surface 8 this may first be coated with a coating material to provide a key for printing.

The treated surface is then offset litho printed with a inks of a plurality of colours to produce a colour image (not shown).

In one example, the printed surface is then screen printed with white ink. The ink is allowed to dry. To accelerate that process the sheet may be passed through an oven.

When the ink is dry the underprinted layer 6 is adhered to the base layer 4 with a double sided self adhesive tape 7.

In another example, the printed surface is offset litho over printed with a white ink. The ink is cured or dried and when curing or drying is complete, the underprinted layer 6 is adhered to the base layer 4 using a self adhesive double sided tape which has a white liner. The liner may be paper but this can be split. A stronger product results from using a dense white polypropylene liner sufficiently thick to provide a dense white. One application of ink may be sufficient. Two applications provide an improvement in the optical quality of the image. Further applications of ink provide little improvement. If the step of offset printing white is omitted tiny air bubbles are visible spoiling the quality of the image.

In either example the assembled sheets are then die cut to separate the mouse mat. The adherence of the ink to the surface 8 of the film 6 is sufficient that no separation of the ink from the surface 8 is caused by the die cutting step.

## Claims

1. A method of making a mat, comprising the steps of:
printing a design and/or text onto a surface of a transparent flexible sheet plastics material;
printing by offset litho white ink over the said design and/ or text; and
adhering the printed surface onto a resiliently compressible backing sheet using a double sided self adhesive tape having a white liner.

2. A method of making a mat as claimed in claim 1, wherein the liner is polypropylene.

3. A method of making a mat comprising the steps of:
coating a glossy surface of transparent flexible sheet plastics material with a coating material to provide a key for printing ink;
printing ink onto the coated surface;
adhering the printed surface onto a resiliently compressible backing sheet to form a laminate; and
die cutting the laminate around a periphery to separate the mat from the sheets.

4. A method as claimed in claim 3, wherein the plastics material comprises polyvinyl chloride or polypropylene.
